# EUROPEAN PATENT APPLICATION

(11) **EP 2 173 111 A1**
(43) Date of publication of application: **07.04.2010**
(21) Application number: 08165928.6
(22) Date of filing: 06.10.2008
(51) Int. Cl.: H04Q 9/00

(54) **Network node apparatus for use in a stimulus-response sensing measurement, network containing such an apparatus and measurement method using such a network**

(71) Applicant: Nederlandse Organisatie voor Toegepast- Natuurwetenschappelijk Onderzoek TNO, 2628 VK Delft (NL)
(72) Inventor: Papp, Zoltan, 2625 LL Delft (NL); Nelisse, Martin Willem, 2624 JS Delft (NL); Volker, Arno Willem Frederik, 2622 KN Delft (NL); Mast, Arjan, 3071 NB Rotterdam (NL)
(74) Representative: Hatzmann, Martin

(57) **Abstract**

A network for performing a stimulus response experiment, for example to measure a propagation delay between different locations on an object contains a node apparatus and a further node apparatus. The node apparatus performs stimulus generation and a further node apparatus performs sensor data capture. The node apparatus comprises a handling circuit configured to control timing of stimulus generation based on a trigger signal. The experiment is prepared in a computer of the node apparatus. The computer supplies a command to a transmitter circuit to command the transmitter circuit to transmit a message to the further node apparatus. The transmitter circuit is used both to transmit the message in response to the command and to generate the trigger signal in a predetermined relation to a time of transmission of the message. Thus, accurate coordination timing is ensured in spite of possible inaccuracies in the preparation control circuit.

## Description

### Field of the invention

The invention relates to a method of acquiring sensor data in a sensor network, a network for applying the method and a node apparatus for use in such a network.

### Background

Synchronization problems in a wireless sensor network are described in an article titled "The Flooding Time Synchronization Protocol", by Miklós Maróti et al, published in the Proceedings of the 2nd international conference on Embedded networked sensor systems, Baltimore, MD, USA 2004 ISBN:1-58113-879-2, Pages: 39 - 49. Use of a wireless network makes it impossible that all sensor nodes in the network have direct access to the same clock circuit. Instead, each sensor node is provided with its own clock. The article notes that consistent distributed sensing and control is impossible in such a wireless network unless the clocks of different sensor nodes are correctly synchronized. The article proposes to achieve synchronization by means of messages between the nodes, each with a time-stamp that indicates the clock time value of the transmitter of a node at the time of transmission, sampling of clock time value in the receiver of another node at the time of reception of the message and adaptation of the clock time values to make clock time values match.

For a number of experiments stimulus-response measurements are needed, wherein one node of a sensor network applies a stimulus to its environment and another node of the network captures measurements of a response of the environment. Such experiments may be time critical, in the sense that a meaningful measurement can be obtained only when it is performed in a predetermined time relation to the stimulus, or at least if one accurately knows the time delay between the time of the stimulus and time of the response that has been captured.

The article of Maróti et al may help to establish such time delays, when the time of the stimulus and the time of sampling the response are measured relative to the local clocks of the nodes that apply the stimulus and sample the response respectively. However, this comes at the expense of transmission of a large number of messages that is needed to synchronize the clocks and the accuracy achievable is limited due to the extra processing stages between the triggering the excitation and the acquisition

### Summary

Among others, it is an object to facilitate the performance of stimulus response experiments with a sensor network.

A node apparatus according to claim 1 is provided for use as a node in a sensor network for performing a stimulus-response experiment. A wireless network may be used, wherein different network nodes may have to contend for access to the wireless network medium. The network will contain both the node apparatus and one or more further node apparatuses. The node apparatus performs at least one of stimulus generation and sensor data capture and the further node apparatus performs at least the other one. In an embodiment, the node apparatus and the further node apparatus may be located attached to the same object under investigation for example, to measure propagation delay between a stimulus and a sensor response at different locations on the object. In another embodiment that may be located in the same fluid medium to measure propagation delay between a stimulus and a sensor response at different locations in the medium.

The node apparatus comprises a handling circuit configured to control timing of said at least one of stimulus generation and sensor data capture that is performed in the node apparatus, based on a trigger signal. The experiment is prepared in a preparation control circuit, such as a computer under control of a program for setting parameter values etc. The preparation control circuit may be unable to support accurate timing coordination, for example because it may be influenced on arbitration of message transmission and/or multitasking in the computer etc.. The preparation control circuit supplies a command to a transmitter circuit to command the transmitter circuit to transmit a message to the further node apparatus. The transmitter circuit is used both to transmit the message in response to the command and to generate the trigger signal in a predetermined relation to a time of transmission of the message. Thus, accurate coordination timing is ensured in spite of possible inaccuracies in the preparation control circuit.

In an embodiment the preparation control circuit may set a parameter in the handling circuit for controlling said one of stimulus generation and sensor data capture that is performed in the node apparatus, before supplying the command to the transmitter circuit. Thus, the preparation control circuit is able to control over other aspects than timing coordination. The parameter may be used to enable triggering and/or set stimulus signal properties such as amplitude and/or duration etc.

The transmitter circuit may be coupled directly to the stimulus generation control circuit, i.e. bypassing the preparation control circuit, or it may be coupled through the preparation control circuit, switching if form the normal preparation mode to a special mode such as an interrupt mode for passing the trigger signal without timing uncertainty. Thus timing uncertainty is avoided. The transmitter circuit itself may have uncertain timing, due to network access arbitration for example, but if this uncertainty is for measurements, an embodiment may be used where this uncertainty is eliminated by generating the trigger signal only upon winning arbitration

In an embodiment distinct transmission commands are defined for the transmitter, to indicate whether or not a trigger signal should be generated upon execution of the command. Thus, more flexible use of the transmitter is made possible.

Although the node apparatus may be configured to perform only one of stimulus generation and response sensing, in an alternative embodiment it may be configured to do both. In this case the trigger signal is used for a further node apparatus that performs an additional sensing or stimulus generation. Thus a larger set of measurements can be obtained with the same number of apparatuses.

The apparatuses provide for a network and method to perform measurements using stimulus generation and response sensing. Generators and sensors attached to an object such as a tube or a frame may be used for example, to monitor the state of the object. In an embodiment sound (i.e. ultrasound or normal sound) may be used for example, to monitor integrity of the object, the generator being a sound generator and the sensor being a sound sensor. Thus a monitoring system containing an object and the network may be realized.

### Brief description of the drawing

These and other objects and advantages will become apparent from a description of exemplary embodiments, using the following figures.
- Figure 1: shows a wireless sensor network
- Figure 2: shows a first node of the wireless sensor network
- Figure 3: shows a second node of the wireless sensor network
- Figure 4: shows a timing diagram
- Figure 5: shows a transmitter circuit

### Detailed description of exemplary embodiments

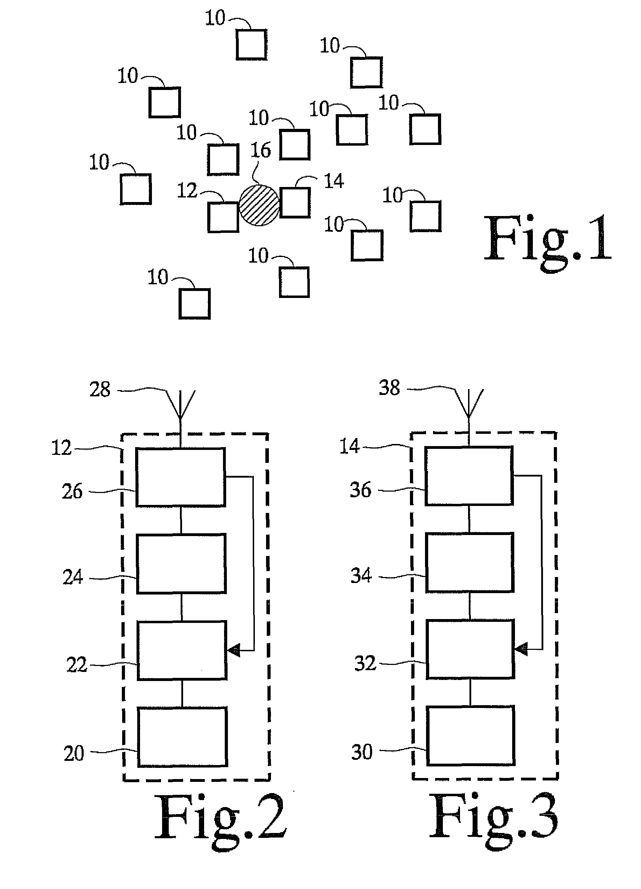

Figure 1 shows a wireless sensor network comprising a plurality of nodes 10, 12, 14. Each of nodes 10, 12, 14 is an apparatus that is configured to communicate with the other nodes in the network. A first node 12 is configured to apply a physical stimulus to a medium in the space wherein nodes 10, 12, 14 are located. The medium may be an object under investigation for example, or a fluid under investigation etc. The space may be filled with medium 16, or medium may fill a part of the space to which first node 12 and second node 14 have access. A second node 14 is configured to measure a response to the physical stimulus from medium 16. In one example, the stimulus may involve applying a heat pulse to a point in the medium, mechanically actuating the medium, supplying light, supplying (ultra)sound etc or combinations thereof and the response may be a time-dependent temperature change at a position in a predetermined spatial relation to the point at which the pulse is applied, movement, received light etc.

Figure 2 shows a first node 12 (or more accurately a node apparatus that functions as first node 12), comprising stimulus generator device 20, a generator device control circuit 22, a first microcomputer 24, a transmitter circuit 26 and a first antenna 28. In the case of a heating experiment device 20 may be a heating device, such as a pulsed laser. In other embodiments stimulus generator device 20 may be a mechanical actuator, a light source etc. Generator device control circuit 22 is coupled to device 20 to drive application of the stimulus. Generator device control circuit 22 may comprise a microprocessor, for example. First microcomputer 24 has outputs coupled to generator device control circuit 22 and to transmitter circuit 26. Transmitter circuit 26 is coupled to first antenna 28 and to a trigger input of device driving circuit 22. First antenna is configured to transmit wireless messages. Radio frequent electromagnetic waves may be used for transmission. Alternatively, other carriers, such as light or (ultra-) sound signals may be used. Antenna 28 is shown symbolically to indicate an appropriate device for transmitting the type of carrier that is used. The signals from first antenna 28 are distinct from the stimulus produced by stimulus generator device 20.

Figure 3 shows a second node 14 (or more accurately a further node apparatus that functions as second node 14), comprising a response sensor 30, a capture circuit 32, a second microcomputer 34, a receiver circuit 36 and a second antenna 38. In the case of a heating experiment sensor 30 may be a temperature sensor. In other embodiments response sensor 30 may be an optical sensor, mechanical sensor etc. Capture circuit 32 is coupled to sensor 30 to capture a measurement of the response to the stimulus. Second microcomputer 34 has outputs coupled to capture circuit 32 and to receiver circuit 36. Receiver circuit 36 is coupled to second antenna 38 and to a trigger input of capture circuit 32.

In one example the network is used for ultrasonic monitoring of an object. Corrosion may be monitored for example. In this example stimulus generator device 20 may be a piezo electric transmitter installed on the object under investigation (e.g. pipe, frame, etc.) and response sensor 30 may be piezo receiver, also installed on the object under investigation, but at a distance from the transmitter.

Such a network may be configured to monitor one or more ultrasonic wave propagation characteristics between a transmitter and receiver. In order to build a "map" of structural integrity a plurality of piezo transmitters and receivers attached to the same object may be used in the network. One or more ultrasonic wave propagation characteristics are used that depend on the structural integrity of the object. These characteristics are estimated from the measured responses. The monitoring may comprise monitoring wave travelling time between transmitters and receivers. Sub-microsecond temporal accuracy is required between the generation of the ultrasonic wave and acquisition of the propagated wave-front in order to calculate the travel time with sufficient accuracy.

As may be noted, first and second node may have similar structures, with a transmitter circuit 26 or a receiver circuit 36 (in fact each node may have both a transmitter circuit and a receiver circuit), a microcomputer and a handling circuit, which may comprise a stimulus generator device 20 and a generator device control circuit 22 in one node or may comprise a sensor 30 and a capture circuit 32 in the other node. The term "handling" circuit is used as a generic term to cover both.

In operation first microcomputer 24 controls a stimulus response experiment under control of a program. The program may set parameters of the stimulus, such as a pulse width and amplitude, a wavelength or frequency etc. and cause control signals for controlling these parameters to be supplied to generator device control circuit 22, without supplying a trigger signal to trigger the time of generation of the stimulus. Once the parameters, if any, have been set, the program causes first microcomputer 24 to send a command to transmitter circuit 26 to transmit a capture control message to a second node 14 of the sensor network.

In response to the command from first microcomputer 24 transmitter circuit 26 transmits the message to the second node 14. Transmitter circuit 26 additionally sends a trigger signal to generator device control circuit 22 in a predetermined time relation to the transmission. Transmitter circuit 26 may be configured to send the trigger signal at the time of the start of transmission for example, or after a predetermined number of words of the message has been transmitted. When a transmission protocol with arbitration is used, the time of transmission may be delayed dependent on arbitration until transmitter circuit 26 has gained a time slot for the transmission. In this case the trigger signal is generated after arbitration has been won. Generator device control circuit 22 triggers stimulus generator device 20 to apply the stimulus in response to the trigger signal from transmitter circuit 26. It may be noted that first microcomputer 24 is bypassed in this trigger process.

In an embodiment, the program of first microcomputer 24 is configured to add information to the command to transmit the message indicating whether or not a trigger signal should be generated upon transmission of the message. In this embodiment transmitter circuit, or a preprocessor in front of it, is configured to monitor this information and to generate trigger signal selectively only for those message for which the need to generate a trigger signal has been indicated. This makes it possible to exchange communication with other nodes without generating stimuli. Alternatively, this may be realized by writing a stimulus enable or disable parameter from first microcomputer 24 to generator device control circuit 22 before supplying the transmission command to transmitter circuit 26.

Receiver circuit 36 in second node 14 receives the message. Receiver circuit 36 sends a trigger signal to capture circuit 32 in a predetermined time relation to the reception. Receiver circuit 36 may be configured to send the trigger signal at the time of the start of reception for example, before all data from the message has been received, or after a predetermined number of words of the message have been received. In addition receiver circuit 36 sends message content from the message to second microcomputer 34. Second microcomputer 34 is configured to respond to this message content by reading and optionally processing captured data from capture circuit 32.

In an embodiment capture circuit 32 may be configured to produce a stream of samples independent of the trigger signal. In this embodiment capture circuit 32 may be configured respond to the trigger signal by recording an indication of a sample in the stream of sensor data samples. The indication indicates that the indicated sample was sampled in a predetermined temporal relation to the time of the trigger signal (e.g. the first sample obtained after trigger signal, or the last sample obtained before the trigger signal). In another embodiment, capture circuit 32 may be configured to respond to the trigger signal by initiating capture of data from sensor 30. This may be used to reduce the number of capture operations, or, if sensor 30 is not able to perform measurements at a sufficiently high rate, to ensure that a measurement is performed in a predetermined time relation to the stimulus.

A plurality of second nodes as shown may be provided, to capture sensor data at the locations of different ones of the second nodes, triggered by the same message from first node 12 to synchronize timing of capture of sensor data at each of the second nodes with the generation of the stimulus from first node 12.

Although an embodiment has been described wherein second node 14 uses a trigger signal that bypasses second microcomputer 34, it should be noted that such a bypass may not be needed if the operation of microcomputer 34 is temporally accurate and deterministic (thus the control of the capture is accurately timed, for example if the only task of second microcomputer 34 at the time of reception is to control capture) and/or the temporal accuracy specification of the capture synchronization is relaxed. If so, the trigger signal may be applied to second microcomputer 34 instead of capture circuit 32. In this case the program of second microcomputer 34 may poll for the trigger signal and proceed to control capture when the trigger signal is detected. If second microcomputer 34 is used for other activities, which could introduce too much uncertainty about the time delay after which second microcomputer 34 responds to the trigger signal, or if unpredictable timing of the trigger signal within execution of a polling loop in the program would introduce too much uncertainty, the bypass to capture circuit 32 may be used to remove the uncertainty.

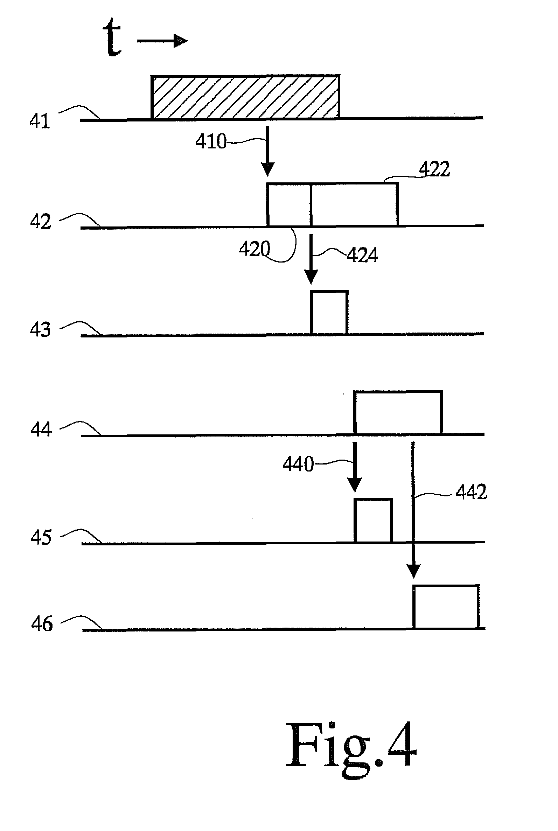

Figure 4 shows an example of a timing diagram of operation. A first trace 41 symbolically shows activity of first microcomputer 24 as a function of time "t". A second trace 42 shows activity of transmitter circuit 26. A third trace 43 shows activity of stimulus generator device 20. A fourth trace 44 shows activity of receiver circuit 36. A fifth trace 45 shows activity of capture circuit 22. A sixth trace 46 shows activity of second microcomputer 34.

A first arrow 410 symbolizes the command from first microcomputer 24 to transmitter circuit 26 to transmit the message. The response of transmitter circuit may involve a variable time delay interval 420, due to arbitration for example, followed by a time interval 422 in which the message is transmitted. A second arrow 424 symbolizes the trigger signal from transmitter circuit 26 to generator device control circuit 22 when the time interval 422 of transmission starts.

Receiver circuit 36 starts an activity when the message is received. Upon detecting reception receiver circuit 36 generates a trigger signal to capture circuit 32, symbolized by a third arrow 440. A fourth arrow 442 symbolizes subsequent transfer of content of the message to second microcomputer 34.

In the embodiment of figures 2 and 3 trigger signal connections that bypass first and second microcomputer 24, 34 altogether have been shown for supplying trigger signals from transmitter circuit 26 and receiver circuit 36 to generator device control circuit 22 and capture circuit 32 respectively. In another embodiment, an interrupt function of first and/or second microcomputer 24, 34 may be used to pass the trigger signal.

In this embodiment transmitter circuit 26 may have an output coupled to an interrupt input of first microcomputer 24 and first microcomputer 24 may have an output coupled to the trigger input of generator device control circuit 22. In this embodiment first microcomputer 24 contains an interrupt handler program configured to generate the trigger signal in response from an interrupt from transmitter circuit 26. This embodiment a predictable interrupt response time is desirable. At least if first microcomputer 24 has a variable interrupt response time, for example because it often disables interrupts, or if interrupts are allowed only during execution of specific types of instruction (e.g. during branch instructions), the timing of the stimulus may become unreliable.

Similarly, receiver circuit 36 may have an output coupled to an interrupt input of second microcomputer 34 and second microcomputer 34 may have an output coupled to the trigger input of capture circuit 32. In this embodiment second microcomputer 34 contains an interrupt handler program configured to generate the trigger signal in response from an interrupt from receiver circuit 36. This embodiment a predictable interrupt response time is also desirable. At least if second microcomputer 34 has a variable interrupt response time, for example because it often disables interrupts, or if interrupts are allowed only during execution of specific types of instruction (e.g. during branch instructions), the timing of capture of sensor data may become unreliable.

Although an embodiment has been shown wherein first node 12 comprises a transmitter circuit 26, it should be appreciated that this node may additionally comprise a receiver circuit to receive messages. This receiver circuit may be used for arbitration purposes for example, and/or to receive commands from other nodes, or to receive back sample data etc. Similarly, although second node 14 has been shown with a receiver circuit 36, it should be appreciated that this node may also comprise a transmitter circuit.

In another embodiment, the generation of a stimulus signal may be triggered by a trigger signal generated in response to reception of a message. This may be realized for example by replacing sensor 30 and capture circuit 32 of second node 14 by a stimulus generator device and a generator device control circuit respectively. In this embodiment, first node 12 may be configured to capture sensor data in a controlled time relation to the stimulus from second node 14. This may be realized by of second node 14 by stimulus generator device 20 and a generator device control circuit 22 by a sensor and a capture circuit respectively. In this way, the capture circuit will receive a trigger signal when a message is transmitted in response to a command to generate a stimulus signal.

A plurality of second nodes of the type with a stimulus generator device and a generator device control circuit instead of sensor 30 and capture circuit 32 may be provided. This makes it possible to perform a stimulus-response experiment wherein stimuli are generated from the different locations of different second nodes in a time coordinated manner. In this case first node 12 may be used as one of the nodes that generates a stimulus and as a timing control node that sends messages to second nodes to generate further stimuli. In addition at least one further second node may be provided to capture sensor data.

Although examples using a wireless network have been shown, wich is particularly useful because it minimizes the disturbance of the medium under investigation be it at the expense of difficult synchronization due to contention for the wireless network medium, it should be appreciated that alternatively a shared wired network medium may be used, wherein arbitration can make the time of message transmission equally uncertain.

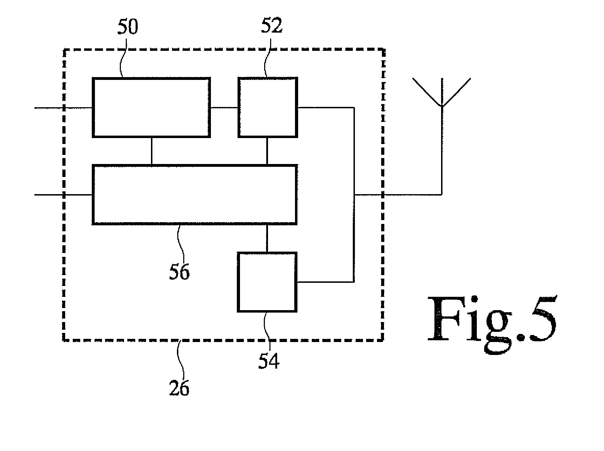

Figure 5 shows an embodiment of a transmitter circuit 26, comprising a message buffer memory 50, a modulator 52, a receiver 54 and a control circuit 56. Buffer memory 50 has an input coupled to first microcomputer 24 (not shown) and an output coupled to modulator 52, which has an output coupled to the antenna. Modulator 52 may contain a carrier generator and an amplifier (not shown). Receiver 54 has an input coupled to the antenna. Control circuit 56 has an input coupled to receiver 54, an interface to buffer memory 50 and outputs coupled to modulator 52 and the trigger input of the device driver control circuit (not shown).

In operation control circuit 56 detects whether message data is available for transmission. This may be done for example by inspecting a content of buffer memory 50, or by means of a signal from the first microcomputer (not shown). Upon detection of the availability of message data, control circuit 56 determines when the message can be transmitted. This may be done by monitoring received signals from receiver 54. A received synchronization signal that marks the start of a time slot may be used for example, or the end of a received signal may be used to determine that the message can be transmitted. Once message transmission is allowed, control circuit 56 controls buffer memory 50 to supply the message data to modulator 52 and control circuit 56 controls modulator 52 to generate a modulated transmission signal carrying the message data.

Control circuit may generate the trigger signal to the device driver control circuit (not shown) simultaneously with control signals to modulator 52 that start or end the message. In an embodiment, collision detection may be used. In this case control circuit 56 continues to monitor received data from receiver 54 at least for some time during transmission. Control circuit 56 causes modulator to break of transmission when a collision is detected and controls a retry of transmission later. In this embodiment control circuit 56 generates the trigger signal upon detection of collision free transmission. Thus, no trigger signal is transmitted in the case of a collision. In another embodiment control circuit 56 may be configured to enable generation of the trigger signal only if receiver 54 has received an acknowledge signal from second node 14. In each embodiment, the timing of the trigger signal is linked to a time point defined relative to the transmission, for example the start of transmission, the time point at which freedom of collision is ensured, the end of transmission etc.

In a further embodiment buffer memory 50 may be configured to buffer data for a plurality of messages in a stream of messages simultaneously. In this embodiment control circuit 56 may be configured to generate trigger signals linked to the time of transmission of each message, or only for those messages for which first microcomputer 24 has indicated that a trigger signal is requested.

## Claims

1. A node apparatus for use as a node in a sensor network for performing a stimulus-response experiment, wherein the node apparatus and a further node apparatus of the network each perform at least mutually different ones of stimulus generation and sensor data capture respectively, the first node apparatus comprising
- a handling circuit configured to control timing of said at least one of stimulus generation and sensor data capture that is performed in the node apparatus, based on a trigger signal;
- a preparation control circuit configured to prepare the experiment and to supply a command to transmit a message to the further node apparatus to trigger said at least one of stimulus generation and sensor data capture that is performed by the further node apparatus;
- a transmitter circuit coupled to the preparation control circuit and configured to transmit the message in response to the command and to generate the trigger signal in a predetermined relation to a time of transmission of the message.

2. A node apparatus according to claim 1, wherein the preparation control circuit has an output coupled to the handling circuit, the preparation control circuit being configured to set a parameter in the handling circuit for controlling said one of stimulus generation and sensor data capture that is performed in the node apparatus, before supplying the command to the transmitter circuit.

3. A node apparatus according to claim 2, wherein the parameter comprises enable/disable information for selectively enabling triggering by the trigger signal in the handling circuit.

4. A node apparatus according to any one of the preceding claims, wherein the transmitter circuit is coupled to a trigger input of the handling circuit bypassing the preparation control circuit.

5. A node apparatus according to any one of claims 1 to 3, wherein the transmitter circuit has an output for the trigger signal coupled to an interrupt input of the preparation control circuit, and the preparation control circuit comprises an interrupt handler configured to forward the trigger signal from the transmitter circuit to the handling circuit.

6. A node apparatus according to any one of the preceding claims, wherein the transmitter circuit is configured to perform arbitration before completing transmission of the message, the transmitter circuit being configured to generate the trigger signal upon winning arbitration.

7. A node apparatus according to any one of the preceding claims, wherein the preparation control circuit is configured to supply information distinguishing commands to transmit messages with and without generation of the trigger signal, and the transmitter circuit is configured to supply the trigger signal conditional upon receiving the information from the preparation control circuit that the trigger signal must be supplied.

8. A node apparatus according to any one of the preceding claims, wherein the handling circuit comprises a stimulus generating device for applying a stimulus to a medium outside the node apparatus and a generator device control circuit for driving the stimulus generating device triggered by the trigger signal.

9. A node apparatus according to any one of the preceding claims, wherein the handling circuit comprises a sensor for sensing a state parameter of a medium outside the node apparatus and a capture device for capturing data from the sensor, the capture circuit being configured to indicate data captured at a time point in a predetermined temporal relation to the trigger signal, and/or to initiate a sensing operation of the sensor in response to the trigger signal.

10. A sensor network for performing a stimulus-response experiment, comprising the node apparatus according to claim 1 and the further node apparatus at mutually different spatial locations, wherein the further node apparatus comprises
- a further handling circuit configured to control timing of said one of stimulus generation and sensor data capture that is performed in the further node apparatus in response to a further trigger signal;
- a receiver circuit coupled to the further handling apparatus and configured to generate the further trigger signal in response to reception of the message.

11. A sensor network according to claim 10, comprising a plurality of further node apparatuses, each configured to perform of said one of stimulus generation and sensor data capture that is performed in the further node apparatus at a respective spatial location in the network in response to the message.

12. A sensor network according to claim 10 or 11, wherein the sensor data capture is performed in the further node apparatus.

13. A sensor network according to claim 10 or 11, wherein the stimulus generation is performed in the further node apparatus.

14. A method of performing a stimulus-response experiment using a sensor network, wherein stimulus generation and sensor data capture are each performed by a respective one of a first node and second node of the network, the method comprising
- using a preparation control circuit in the first node of the network to execute a program to prepare the experiment;
- supplying a program based command from the preparation control circuit to a transmitter circuit in the first node to transmit a message to the second node of the network;
- generating a trigger signal from the transmitter circuit in a predetermined relation to a time of transmission of the message by the transmitter circuit;
- using the trigger signal and reception of the message in the first node and the second node respectively, to synchronize stimulus generation and sensor data capture.

15. A method according to claim 14, wherein the medium is a solid object under investigation and the transmitter is a sound transmitter attached to the object under investigation and wherein the second node is a sound sensor attached to said object, the method comprising determining a sound wave propagation delay time from the sound transmitter to the sound sensor.
